# EUROPÄISCHE PATENTSCHRIFT

(11) **EP 2 417 335 B1**
(45) Veröffentlichungstag und Bekanntmachung des Hinweises auf die Patenterteilung: **04.09.2013**
(21) Anmeldenummer: 10705823.2
(22) Anmeldetag: 24.02.2010
(51) Int. Cl.: F01N 3/20, F02B 37/16

(54) **DOSIERSYSTEM ZUR EINDÜSUNG EINES REDUKTIONSMITTELS IN DEN ABGASSTROM EINES VERBRENNUNGSMOTORS**
METERING SYSTEM FOR INJECTING A REDUCING AGENT INTO THE EXHAUST GAS FLOW OF AN INTERNAL COMBUSTION ENGINE
SYSTEME DE DOSAGE SERVANT A L'INJECTION D'UN AGENT DE REDUCTION DANS LE FLUX DE GAZ D'ECHAPPEMENT D'UN MOTEUR A COMBUSTION INTERNE

(30) Priorität: 09.04.2009 DE 102009016810
(43) Veröffentlichungstag der Anmeldung: 15.02.2012
(73) Patentinhaber: Albonair GmbH, 44263 Dortmund (DE)
(72) Erfinder: HÜTHWOHL, Georg, 59494 Soest (DE)
(74) Vertreter: Methling, Frank-Oliver
(86) Internationale Anmeldenummer: PCT/EP2010/001141
(87) Internationale Veröffentlichungsnummer: WO 2010/115487

(56) Entgegenhaltungen:
- EP-A1- 1 524 417
- WO-A1-2007/091969
- DE-A1- 2 027 883
- DE-A1- 2 216 059
- DE-U1- 20 119 514
- JP-A- 2003 343 245
- US-A1- 2005 011 184
- US-A1- 2007 277 514

## Beschreibung

Die Erfindung betrifft ein Reduktionsmitteldosiersystem zur Eindüsung eines Reduktionsmittels in den Abgasstrom eines aufgeladenen Verbrennungsmotors zur selektiven katalytischen Reduktion, wobei das Dosiersystem mit einem Reduktionsmitteltank verbindbar ist, aus dem Reduktionsmittel entnehmbar ist, wobei das Dosiersystem zumindest eine Düse aufweist, durch die mittels Druckluft das Reduktionsmittel in den Abgasstrom eindüsbar ist, wobei zumindest ein Teil der Druckluft einem Lader des Verbrennungsmotors entnommen wird. Ferner betrifft die Erfindung ein Verfahren zur Steuerung der Eindüsung eines Reduktionsmittels mittels Druckluft in den Abgasstrom eines Verbrennungsmotors zur selektiven katalytischen Reduktion.

Ein derartiges Reduktionsmitteldosiersystem ist aus der US 2005/011184 A1 bekannt.

Dosiersysteme zur Einbringung einer Harnstofflösung in den Abgasstrom sind bekannt. Unter Harnstofflösung soll in diesem Sinne sowohl Ammoniak als auch Harnstofflösung und insbesondere das so genannte AdBlue, d.h. eine Harnstofflösung gemäß DIN 70070 verstanden werden. Sogenannte SCR-Katalysatoren werden eingesetzt um die Stickoxydemission von Dieselmotoren zu vermindern. Hierzu wird ein Reduktionsmittel in das Abgassystem mit einer Dosiervorrichtung eingedüst. Als Reduktionsmittel dient Ammoniak.

Da das Mitführen von Ammoniak in Fahrzeugen sicherheitskritisch ist, wird Harnstoff in wässriger Lösung mit üblicherweise 32,5 % Harnstoffanteil eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im wesentlichen Zeit (Verdampfungs- und Reaktionszeit), Temperatur und Tröpfchengröße der eingedüsten Harnstofflösung. In diesen SCR- Katalysatoren wird durch selektive katalytische Reduktion (englisch: selective catalyic reduction, SCR) der Ausstoß von Stickoxyden um etwa 90 % reduziert.

Es sind diverse Systeme zur Eindüsung von Harnstoff als Reduktionsmittel bekannt. Das Eindüsen des Harnstoffes kann durch Druckluft unterstützt werden. Die Druckluft dient als Energielieferant. Dies ist zum Erreichen von kleinen Tröpfchen von Vorteil. Die Harnstofflösung wird mittels eines Dosiersystems dosiert, in den Abgasstrom eingespritzt und sorgt im SCR- Katalysator für die gewünschte chemische Reaktion. Hierbei werden die Stickoxyde in Stickstoff und Wasserdampf umgewandelt.

Aus der DE 201 19 514 U1 ist eine Reduktionsmitteldosiereinrichtung bekannt, bei der die Druckluft zur Bildung eines Aerosols durch die Ladeluft einer Aufladegruppe des Verbrennungsmotors bereit gestellt wird. Dies ermöglicht den Einsatz eines Dosiersystems auch bei Fahrzeugen und Maschinen, die nicht über eine eigene Druckluftversorgung verfügen, deren Motor jedoch aufgeladen ist.

Nachteilig ist dabei, dass für eine ausreichende Versorgung mit Druckluft eine Mindestdrehzahl des Motors erforderlich ist und die Druckluft erst nach einer bestimmten Betriebsdauer zur Verfügung steht. In anderen Betriebspunkten, beispielsweise bei niedriger Drehzahl und/oder Motorlast, ist jedoch eine ausreichende Druckluftversorgung durch den Lader des Motors nicht gewährleistet.

Die Aufgabe der Erfindung ist es, diese Nachteile zu überwinden und eine gattungsgemäße Dosiereinrichtung respektive ein Betriebsverfahren derart weiterzubilden, dass eine Zudosierung eines Reduktionsmittels zur Reduzierung der Abgasschadstoffe unabhängig vom momentanen Betriebspunkt des Verbrennungsmotors möglich ist.

Diese Aufgabe wird erfindungsgemäß durch ein Dosiersystem gemäß Anspruch 1 sowie durch ein Verfahren zur Steuerung der Eindüsung eines Reduktionsmittels gemäß Anspruch 13 gelöst. Vorteilhafte Ausgestaltungen der Erfindung sind in den jeweiligen abhängigen Ansprüchen angegeben.

Besonders vorteilhaft bei dem Reduktionsmitteldosiersystem zur Eindüsung eines Reduktionsmittels in den Abgasstrom eines aufgeladenen Verbrennungsmotors zur selektiven katalytischen Reduktion, wobei das Dosiersystem mit einem Reduktionsmitteltank verbindbar ist, aus dem Reduktionsmittel entnehmbar ist, wobei das Dosiersystem zumindest eine Düse aufweist, durch die mittels Druckluft das Reduktionsmittel in den Abgasstrom eindüsbar ist, wobei zumindest ein Teil der Druckluft einem Lader des Verbrennungsmotors entnommen wird, ist es, dass die Druckluftversorgung eine elektrische Luftpumpe zur Erzeugung von Druckluft und parallel zu der Luftpumpe einen Bypass aufweist, sodass über den Bypass die Ladeluft des Laders die Luftpumpe überströmt/überströmen kann.

Bei dem aufgeladenen Motor handelt es sich also um einen Motor mit Aufladegruppe, bei der es sich um einen Abgasturbolader und/oder einen Kompressor handeln kann. Zusätzlich ist erfindungsgemäß in den Strang der Druckluftversorgung des Dosiersystems eine elektrische Luftpumpe, wie beispielsweise ein Membranverdichter oder dergleichen, integriert. Über einen in den Strang der Druckluftversorgung des Dosiersystems integrierten Bypass, der strömungstechnisch parallel zur Luftpumpe geschaltet ist, kann die Ladeluft, d.h. der Druckluftanteil, der dem Lader des Motors entnommen ist, parallel zu dem die Luftpumpe enthaltenden Teilstrang strömen, also die Pumpe überströmen. D.h., dass parallel zu der Luftpumpe ein Überströmkanal, d.h. eine Überströmleitung, verläuft.

Es wird somit bei dem erfindungsgemäßen Dosiersystem zur Injektion oder Eindüsung eines Reduktionsmittels, z.B. einer Harnstofflösung, in den Abgasstrom die Druckluftversorgung von einem Lader des aufgeladenen Verbrennungsmotors und ggf. alternativ oder kumulativ von einer bedarfsweise zuschaltbaren elektrischen Luftpumpe besorgt. Hierdurch ist in allen Betriebspunkten des Motors eine Druckluftversorgung des Reduktionsmitteldosiersystems gewährleistet. Eingesetzt werden kann das System bei allen Fahrzeugen und Maschinen mit aufgeladenen Motoren, jedoch bedarf es keiner eigenen Druckluftversorgung dieser Fahrzeuge und Maschinen, wie sie üblicherweise bei Nutzfahrzeugen in Form eines zusätzlichen Druckluftsystems vorgesehen ist. Das erfindungsgemäße System ist somit sehr vorteilhaft einsetzbar bei allen Maschinen und Fahrzeugen, die nicht über eine eigene Druckluftversorgung verfügen, deren Verbrennungsmotor jedoch aufgeladen ist.

In den Betriebspunkten des Motors, in denen ein ausreichender Ladedruck des Laders, also beispielsweise eines Turboladers oder eines Kompressors, verfügbar ist, wird die Ladeluft, d.h. ein hierzu entnommener Teil der Ladeluft, zur Zerstäubung der Reduktionsmittellösung verwendet, wobei der erfindungsgemäß vorgesehene Elektrokompressor nur in der Niedriglast bzw. Niedrigdrehzahl arbeitet, um die für das Dosiersystem benötigte Druckluft bereit zu stellen.

Besonders vorteilhaft ist dabei, dass die Lebensdauer des Elektromotors der Luftpumpe sowie die Lebensdauer der Luftpumpe selbst geschont werden, da ein Betrieb der Luftpumpe nur in den Betriebspunkten des Verbrennungsmotors erfolgt, in denen seitens des Laders des aufgeladenen Verbrennungsmotors kein ausreichender Ladedruck in der Ladeluft verfügbar ist. Auch wird durch die lediglich bedarfsweise Zuschaltung der elektrischen Luftpumpe vermieden, dass das elektrische Bordnetz unnötig belastet wird, da das Bordnetz die zum Betrieb der Pumpe benötigte elektrische Leistung bereitstellen muss.

Mit der Formulierung, dass zumindest ein Teil der Druckluft einem Lader des Verbrennungsmotors entnommen wird, ist folglich gemeint, dass die für das Dosiersystem benötigte Druckluft in weiten Betriebsbereichen der Ladegruppe des aufgeladenen Verbrennungsmotors entnommen wird und somit die elektrische Luftpumpe zur Verdichtung von Luft nur zeitweise und unterstützend, also temporär zum Einsatz kommt. Es ist jedoch auch möglich, die elektrische Luftpumpe kumulativ zum Lader des Motors als Druckluftquelle zu nutzen.

Dabei kann es sich bei dem Lader um einen Turbolader oder einen von dem Verbrennungsmotor unmittelbar angetriebenen Kompressor handeln.

Vorzugsweise weist der Bypass ein Rückschlagventil auf. Einerseits wird hierdurch das Rückströmen von Druckluft der elektrischen Luftpumpe über den Bypass verhindert, andererseits öffnet dieses druckbetätigte Ventil automatisch, sobald ein ausreichender Ladedruck des Laders zur Verfügung steht, sodass dann die Ladeluft zur Zerstäubung des Reduktionsmittels zum Einsatz kommen kann.

Besonders bevorzugt ist stromab der Luftpumpe und des Bypasses ein Drucksensor angeordnet, sodass die Luftpumpe in Abhängigkeit des mittels des Drucksensors gemessenen Druckes zuschaltbar/abschaltbar ist / zugeschaltet/abgeschaltet wird.

Durch die Anordnung eines Drucksensors in dem Druckluftstrang des Dosiersystems stromab der Luftpumpe sowie des Bypasses kann der anliegende Luftdruck erfasst werden. Übersteigt der anliegende Druck den Förderdruck der Luftpumpe, so steht ausreichend Ladeluft aus dem Lader des Verbrennungsmotors zur Verfügung, sodass eine Abschaltung der elektrischen Luftpumpe erfolgen kann. Umgekehrt erfolgt eine Zuschaltung der Luftpumpe, wenn der Luftdruck einen vorgebbaren Wert unterschreitet, d.h. wenn der Ladedruck der Ladegruppe des Verbrennungsmotors zu niedrig ist.

In einer besonders bevorzugten Ausführungsform erhält das Dosiersystem ein Signal des Abgasmassenstromes aus der Motorsteuerung. Der Abgasmassenstrom wird von dem Motorsteuergerät aus angesaugtem Luftmassenstrom und Kraftstoffmassenstrom berechnet und als Signal des Abgasmassenstromes bereitgestellt. Alternativ weist das Dosiersystem einen Sensor zur Messung des Abgasmassenstromes auf. Vorzugsweise weist das Dosiersystem alternativ oder kumulativ einen Sensor zur Messung der Abgastemperatur auf.

Aus dem Abgasmassenstromsignal und / oder der Abgastemperatur ist es möglich, die in Abhängigkeit des jeweiligen Motorbetriebspunktes vorliegenden Betriebsparameter Abgastemperatur und / oder Abgasmassenstrom zu erfassen und über eine entsprechende Steuerelektronik des Dosiersystems auszuwerten und den Druck und / oder die Luftmenge und / oder die elektrische Luftpumpe und / oder Ventilöffnungszeiten der Druckluftversorgung in Abhängigkeit der gemessenen Betriebsparameter zu regeln.

Die Einflussparameter für die Anpassung der Dosierung der Luftmenge sind insbesondere:
- Abgastemperatur
- Abgasmassenstrom
- Harnstoffmassenstrom
- Erforderlicher Katalysatorwirkungsgrad
- Katalysatorgröße
- Aufbereitungsstrecke zwischen Harnstoffeindosierung und Katalysator

Es ist mit dem erfindungsgemäßen Dosiersystem somit möglich, in jedem einzelnen Betriebspunkt abhängig von den jeweiligen Randbedingungen die Luftmenge zu optimieren.

In einer besonders bevorzugten Ausführungsform weist die Druckluftversorgung ein Drosselventil auf. Durch die Anordnung eines Drosselventils ist es möglich, den Luftdruck in dem Luftdrucksystem vor der Zuführung zur Düse entsprechend abzusenken.

In einer besonders bevorzugten Ausführungsform weist das Dosiersystem eine Dosierpumpe zur Förderung der Reduktionsmittellösung, insbesondere der Harnstofflösung, auf. Insbesondere kann es sich bei einer solchen Dosierpumpe um eine steuerbare Dosierpumpe hinsichtlich des geförderten Massenstromes an Harnstofflösung handeln, so dass die Fördermenge an Harnstofflösung dem jeweiligen Betriebspunkt durch eine entsprechende Ansteuerung der Dosierpumpe anpassbar ist.

Der Begriff Reduktionsmittel bildet den Oberbegriff zu dem Begriff der Harnstofflösung, es werden jedoch im Rahmen dieser Beschreibung im Übrigen beide Begriffe synonym verwendet, d.h. dass die Begriffe Harnstofflösung bzw. Harnstoff bzw. Reduktionsmittel synonym verwendet werden, da üblicherweise eine Harnstofflösung als Reduktionsmittel zur selektiven katalytischen Reduktion zum Einsatz kommt.

Vorzugsweise ist zwischen der Reduktionsmittelleitung und einer Leitung der Druckluftversorgung eine Verbindungsleitung angeordnet, wobei die Verbindungsleitung ein Schaltventil, insbesondere ein Magnetventil, aufweist.

Um in Dosierpausen die Luftzufuhr vollständig zu unterbrechen, ist es erforderlich, den Harnstoff aus den heißen Bereichen zu entfernen, um zu vermeiden, dass sich Ablagerungen bilden. Andernfalls würde der Harnstoff sich bei hohen Temperaturen zersetzen und zu Ablagerungen und somit zu Verstopfungen führen. Durch die Anordnung einer Druckluftleitung, d.h. einer Verbindungsleitung zwischen der Reduktionsmittelleitung, d.h. der Harnstoffleitung, und einer Leitung der Druckluftversorgung, können derartige Ablagerungen verhindert werden, indem die Harnstoffbildung in Dosierpausen mittels Druckluft freigeblasen wird. In diese Verbindungsleitung wird ein Magnetventil eingesetzt, das zum Freiblasen der Harnstoffleitung bei vorhandenem Luftdruck in der Luftleitung, also vorzugsweise bei eingeschalteter Luftpumpe geöffnet wird.

Im Dosierbetrieb ist dieses Schaltventil geschlossen. Um die Harnstoffleitung mit Druckluft frei zu blasen, wird die Harnstoffförderung durch die Dosierpumpe abgestellt und das Schaltventil geöffnet. Hierdurch ergibt sich ein Druckgefälle in der Dosierleitung und die Druckluft treibt den Harnstoff in das Abgassystem. Die Leitung wird somit freigeblasen. Nach einem kurzzeitigen Luftstoß ist der Harnstoff aus der Dosierdüse ausgeblasen und die Luftzufuhr kann komplett abgeschaltet werden.

Vorzugsweise weist das Dosiersystem ein Steuergerät auf, mittels dessen die Luftpumpe und / oder ein Drosselventil und / oder eine Dosierpumpe und / oder ein Druckluftkompressor in Anhängigkeit der von dem Sensor oder den Sensoren erfassten Messwerten steuerbar ist / gesteuert wird.

Durch die Anordnung eines derartigen Steuergerätes, welches eine oder mehrere Komponenten des Dosiersystems in Abhängigkeit der Sensormesswerte, d.h. in Abhängigkeit der aktuellen Betriebsparameter, steuert, ist eine Optimierung des Betriebs des Dosiersystems, d.h. insbesondere eine Luftoptimierung in besonders vorteilhafter Weise realisierbar. Es ist mittels eines derartigen Steuergerätes somit möglich, die Harnstofffördermenge und die Luftfördermenge in optimaler Weise den aktuellen Betriebsparametern des Verbrennungsmotors und des Katalysators zur selektiv katalytischen Reduktion anzupassen und somit zu regeln.

Vorzugsweise weist das Dosiersystem einen Reduktionsmittellösungstank, insbesondere einen Harnstofflösungstank auf. Dadurch, dass das Dosiersystem selbst einen solchen Tank aufweist, ist es möglich, das Dosiersystem in entsprechenden Umgebungen nachzurüsten, in denen ein Harnstofflösungstank nicht bereits vorhanden ist.

In einer bevorzugten Ausführungsform weist das Dosiersystem eine Zweistoffdüse auf. Besonders bevorzugt handelt es sich bei der Zweistoffdüse um eine außenmischende Düse.

Das erfindungsgemäße Verfahren zur Steuerung der Eindüsung oder Injektion eines Reduktionsmittels, insbesondere einer Harnstofflösung, mittels Druckluft in dem Abgasstrom eines aufgeladenen Verbrennungsmotors zur selektiven katalytischen Reduktion, ist vorzugsweise derart ausgestaltet, dass die zur Zerstäubung bzw. Eindüsung des Reduktionsmittels benötigte Druckluftmenge der Ladeluft eines Laders des Verbrennungsmotors entnommen wird, wobei bei Unterschreitung eines Mindestdruckes der Ladeluft eine elektrische Luftpumpe temporär zugeschaltet wird.

Vorzugsweise werden bei Unterbrechung oder Beendigung der Eindüsung von Reduktionsmittel, insbesondere Harnstofflösung, die Reduktionsmittel führenden Leitungen mittels Druckluft von dem Reduktionsmittel gereinigt.

Problematisch ist, dass sich der Harnstoff bei hohen Temperaturen oberhalb etwa 200° Celsius zersetzen kann und schwer lösbare Ablagerungen bildet. Diese Ablagerungen können die Düsen verstopfen. Die Druckluft kann daher in vorteilhafter Weise verwendet werden, um die Harnstoffdüse bei hohen Abgastemperaturen zusätzlich zu kühlen.

Das Verfahren ist also vorzugsweise derart ausgestaltet, dass eine Beendigung oder Unterbrechung der Förderung von Harnstofflösung zeitlich vor der Beendigung oder Unterbrechung der Druckluftförderung erfolgt und die Druckluft nach Unterbrechung oder Beendigung der Förderung der Harnstofflösung dazu genutzt wird, die Harnstofflösung führenden Teile mittels der Druckluft zu reinigen. Hierdurch wird der Harnstoff insbesondere aus den heißen Bereichen des Dosiersystems entfernt. Anderenfalls würde der Harnstoff sich bei hohen Temperaturen zersetzen und Ablagerungen bilden und könnte zu Verstopfungen führen.

Um die Harnstoffleitung mit Druckluft frei zu blasen, wird die Harnstoffförderung durch die Dosierpumpe abgestellt und das Schaltventil in der Verbindungsleitung zwischen Druckluftstrang und Reduktionsmittelstrang geöffnet. In Folge dessen entsteht ein Druckgefälle in der Dosierleitung, so dass die Druckluft den Harnstoff in das Abgassystem treibt und somit die harnstoffführende Leitung freigeblasen wird. Nach einem kurzzeitigen Luftstoß ist der Harnstoff aus der Dosierdüse ausgeblasen und die Luftzufuhr kann ebenfalls komplett abgeschaltet werden.

Eine Unterbrechung oder Beendigung der Eindüsung von Harnstofflösung kann somit durch Abschaltung einer Dosierpumpe erfolgen.

Vor dem Wiedereinschalten der Dosierung ist es sinnvoll, zunächst die Druckluft auf einen Wert einzustellen, der oberhalb der normalen Dosierluftzufuhr ist, um die Düse abzukühlen, bevor der Harnstoff in diese eintritt.

Das Ausblasen des Harnstoffs aus den Leitungen ist ebenfalls vorteilhaft, wenn das Gesamtsystem abgeschaltet wird. Harnstofflösung friert bei Temperaturen unterhalb von -11 °Celsius ein. Hierbei dehnt sich die Harnstoffwasserlösung um etwa 10% aus. Dies führt zu einem Frostdruck, durch den Komponenten zerstört werden könnten. Daher ist es vorteilhaft, den Harnstoff aus der Düse und ggf. den Leitungen und Drucksensoren auszublasen, bevor das System komplett abgeschaltet wird.

Dies kann insbesondere dadurch erfolgen, dass nach der Beendigung der Harnstoffförderung das Gesamtsystem mittels Druckluft gereinigt wird, d.h. dass der Harnstoff aus dem System mittels Druckluft ausgeblasen wird.

Vorzugsweise erfolgt eine Ansteuerung zumindest einer Dosierpumpe und / oder zumindest einer Luftpumpe und / oder zumindest eines Luftregelventils und / oder eines Schaltventils in Abhängigkeit der Betriebsparameter Abgastemperatur und Abgasmassenstrom bei dem erfindungsgemäßen Verfahren zur Steuerung der Eindüsung oder Injektion der Harnstofflösung. Hierzu können mittels eines entsprechenden Steuergerätes die verschieden erfassten Betriebsparameter ausgewertet werden, so dass eine Ansteuerung der Komponenten exakt erfolgen kann.

In der Figur ist ein Ausführungsbeispiel eines erfindungsgemäßen Dosiersystems zur Eindüsung einer Harnstofflösung in den Abgasstrom eines aufgeladenen Verbrennungsmotors schematisch dargestellt und wird nachfolgend erläutert. Es zeigt:

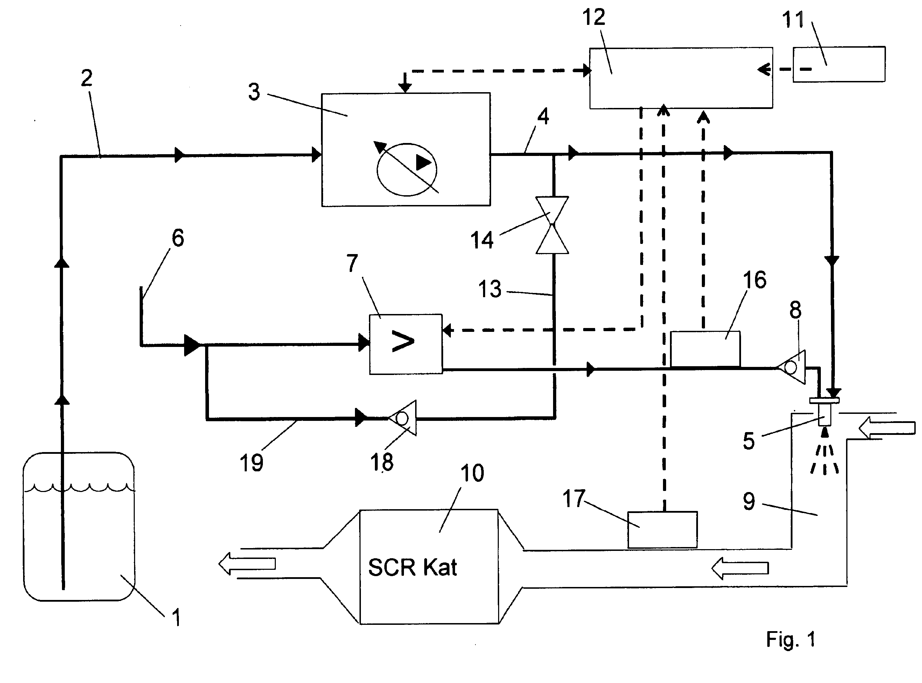

Figur 1 ein Anlagenschema eines erfindungsgemäßen Reduktionsmitteldosiersystems.

Figur 1 zeigt die schematische Darstellung einer Ausführungsform des Reduktionsmitteldosiersystems. Als Reduktionsmittel kommt vorzugsweise Harnstofflösung mit 32,5 % Harnstoffanteil in wässriger Lösung gemäß DIN 70070 zum Einsatz.

Harnstoff wird aus einem Tank 1 über eine Saugleitung 2 von der Dosierpumpe 3 angesaugt. Die Dosierpumpe 3 ist beispielsweise eine Membranpumpe oder eine Kolbenpumpe, die mit jedem Hub eine definierte Menge an Harnstofflösung fördert und somit gleichermaßen dosiert. Über eine Druckleitung 4 wird der Harnstoff zu einer Zweistoffdüse 5 geleitet. Die Zweistoffdüse 5 ist vorzugsweise eine außenmischende Düse, bei der ein Luftstrahl den Harnstoff zerstäubt.

Druckluft (Ladeluft) wird über die Druckluftleitung 6 dem nicht dargestellten Lader des aufgeladenen Verbrennungsmotors (ebenfalls nicht dargestellt) entnommen. Der Druckluft führende Strang weist eine schaltbare elektrische Luftpumpe 7 auf. Die Luftpumpe 7 ist über den parallel geschalteten Bypass 19 mit Druckluft überströmbar. Der Bypass 19 weist ein Rückschlagventil 18 auf, welches bei anliegen eines entsprechenden Druckes in der Druckluftleitung 6 selbsttätig öffnet.

Übersteigt der Ladedruck in der Leitung 6 den Öffnungsdruck des Rückschlagventils 18 im Bypass 19, so wird die elektrische Luftpumpe 7 überströmt. In diesem Fall liegt der höhere Druck der Ladeluft am Drucksensor 16 an, der stromab von Bypass 19 und Luftpumpe 7 angeordnet ist. Der gemessene Wert des Sensors 16 wird an die Steuerelektronik 12 übergeben, sodass die elektrische Luftpumpe 7 von der Elektronik 12 abgeschaltet werden kann.

Weitere Eingangsgrößen für die Steuerung des Dosiersystems mittels der elektronischen Steuereinheit 12 sind Motordaten wie der Abgasmassenstrom, die von der Motorelektronik übergeben werden. Weiterhin die Abgastemperatur, ermittelt vom Temperatursensor 17, sowie der Druck der Druckluft am Sensor 16 vor der Zweistoffdüse 5. Der Druck vor der Zweistoffdüse 5 ist ein Maß für den durchgesetzten Luftvolumenstrom. Die Luft wird über eine Druckluftleitung und ein Rückschlagventil 8 zu der Zweistoffdüse 5 geleitet. Der Harnstoff wird in der Zweistoffdüse 5 von der Druckluft zerstäubt und dem Abgasstrom 9 zugeführt.

Zur Erfassung der Betriebsparameter Abgasmassenstrom, Luftdruck und Abgastemperatur sind angeordnet ein Sensor 11 zur Erfassung des Abgasmassenstromes, ein Drucksensor 16 zur Erfassung des Druckes der Druckluft vor der Zweistoffdüse 5, sowie ein Temperatursensor 17 zur Erfassung der Abgastemperatur im Abgasstrom 9. In einer nicht dargstellten Alternative wird ein Abgasmassenstromsignal von der Motorsteuerung bereitgestellt. Die Messwerte der Sensoren 11, 16, 17 werden der Steuereinheit 12 zugeführt.

Der Fluss der Sensorsignale bzw. der Steuersignale ist in der Figur dargestellt durch die gestrichelten Pfeile.

In der Steuereinheit 12 werden die erfassten Sensordaten und Motordaten ausgewertet und es erfolgt eine Ansteuerung der elektrischen Luftpumpe 7, wenn der Druck der Ladeluft zu niedrig ist, und der Dosierpumpe 3 in Abhängigkeit der momentanen Betriebsdaten. Die Düsenspitze der Zweistoffdüse 5 ist im Abgasstrom 9 angeordnet. Der Harnstoff wird über die Abgasleitung zum SCR-Katalysator 10 geleitet. Hierbei verdampft ein großer Teil der Flüssigkeitströpfchen. Der Harnstoff wandelt sich in Ammoniak um. Im Katalysator 10 selbst wird mit dem Ammoniak die Stickoxydemission des Motors reduziert.

Das Rückschlagventil 8 in der Druckluftleitung vor der Zweistoffdüse 5 verhindert, das bei eventuellen Verstopfungen der Düse 5 der Harnstoff in die Druckluftleitungen gedrückt werden kann.

Die Druckluftleitung ist mit der Harnstoffleitung 4 über die Leitung 13 verbunden. Im dargestellten Ausführungsbeispiel ist dieser Abzweig 13 des Druckluftstrangs hinter Luftpumpe 7 und Bypass 19 angeordnet. Die Leitung 13 weist ein schaltbares Magnetventil 14 auf. Während des Dosierbetriebs ist das Schaltventil 14 in der Verbindungsleitung 13 geschlossen. Die Druckluft strömt durch die Düse 5. Hierbei wird der zudosierte Harnstoff zerstäubt. Wird bei ausgeschalteter Dosierpumpe 3 das Schaltventil 14 geöffnet, so strömt Luft in die Druckleitung 4 des Harnstoffs. Der Harnstoff in Leitung 4 und Düse 5 wird ausgetrieben. Hiermit ist der Bereich der Düse 5 nach Ausstellen des Motors harnstofffrei und somit frostbeständig. Im Betrieb des Motors bei hohen Abgastemperaturen ohne Dosierung können sich keine Ablagerungen bilden.

## Patentansprüche

1. Reduktionsmitteldosiersystem zur Eindüsung eines Reduktionsmittels in den Abgasstrom (9) eines aufgeladenen Verbrennungsmotors zur selektiven katalytischen Reduktion, wobei das Dosiersystem mit einem Reduktionsmitteltank (1) verbindbar ist, aus dem Reduktionsmittel entnehmbar ist, wobei das Dosiersystem zumindest eine Düse (5) aufweist, durch die mittels Druckluft das Reduktionsmittel in den Abgasstrom (9) eindüsbar ist, wobei zumindest ein Teil der Druckluft einem Lader des Verbrennungsmotors entnommen wird, **dadurch gekennzeichnet, dass** die Druckluftversorgung (6) eine elektrische Luftpumpe (7) zur Erzeugung von Druckluft und parallel zu der Luftpumpe (7) einen Bypass (19) aufweist, sodass über den Bypass (19) die Ladeluft des Laders die Luftpumpe (7) überströmt/überströmen kann.

2. Dosiersystem nach Anspruch 1, **dadurch gekennzeichnet, dass** der Bypass (19) ein Rückschlagventil (18) aufweist.

3. Dosiersystem nach Anspruch 1 oder 2, **dadurch gekennzeichnet, dass** stromab der Luftpumpe (7) und des Bypasses (19) ein Drucksensor (16) angeordnet ist, sodass die Luftpumpe (7) in Abhängigkeit des mittels des Drucksensors (16) gemessenen Druckes zuschaltbar/abschaltbar ist / zugeschaltet/abgeschaltet wird.

4. Dosiersystem nach einem der vorherigen Ansprüche, **dadurch gekennzeichnet, dass** es sich bei dem Lader um einen Turbolader oder einen von dem Verbrennungsmotor unmittelbar angetriebenen Kompressor handelt.

5. Dosiersystem nach einem der vorherigen Ansprüche, **dadurch gekennzeichnet, dass** das Dosiersystem Mittel zur Berechnung des Abgasmassenstromes oder einen Sensor (11) zur Messung des Abgasmassenstromes aufweist.

6. Dosiersystem nach einem der vorherigen Ansprüche, **dadurch gekennzeichnet, dass** das Dosiersystem einen Sensor (17) zur Messung der Abgastemperatur aufweist.

7. Dosiersystem nach einem der vorherigen Ansprüche, **dadurch gekennzeichnet, dass** die Druckluftversorgung (6) ein Drosselventil (15) aufweist.

8. Dosiersystem nach einem der vorherigen Ansprüche, **dadurch gekennzeichnet, dass** das Dosiersystem eine Dosierpumpe (3) zur Förderung des Reduktionsmittels aufweist.

9. Dosiersystem nach einem der vorherigen Ansprüche, **dadurch gekennzeichnet, dass** zwischen einer Reduktionsmittelleitung (4) und einer Leitung der Druckluftversorgung eine Verbindungsleitung (13) angeordnet ist, wobei die Verbindungsleitung (13) ein Schaltventil (14) aufweist, insbesondere ein Magnetventil.

10. Dosiersystem nach einem der vorherigen Ansprüche, **dadurch gekennzeichnet, dass** das Dosiersystem ein Steuergerät (12) aufweist, mittels dessen die Luftpumpe (7) und/oder ein Drosselventil (15) und/oder eine Dosierpumpe (3) in Abhängigkeit der von dem/den Sensor/en (11, 16, 17) erfassten Messwerte/n steuerbar ist/gesteuert wird.

11. Dosiersystem nach einem der vorherigen Ansprüche, **dadurch gekennzeichnet, dass** das Dosiersystem Reduktionsmitteltank (1), insbesondere einen Harnstofflösungstank, aufweist.

12. Dosiersystem nach einem der vorherigen Ansprüche, **dadurch gekennzeichnet, dass** das Dosiersystem eine Zweistoffdüse (5) aufweist, insbesondere eine außenmischende Düse.

13. Verfahren zur Steuerung der Eindüsung eines Reduktionsmittels, insbesondere einer Harnstofflösung, mittels Druckluft in den Abgasstrom (9) eines aufgeladenen Verbrennungsmotors zur selektiven katalytischen Reduktion, **dadurch gekennzeichnet, dass** die zur Zerstäubung des Reduktionsmittels benötigte Druckluftmenge der Ladeluft eines Laders des Verbrennungsmotors entnommen wird, wobei bei Unterschreitung eines Mindestdruckes der Ladeluft eine elektrische Luftpumpe temporär zugeschaltet wird, wobei die Druckluftversorgung (6) parallel zu der Luftpumpe (7) einen Bypass (19) aufweist, sodass über den Bypass (19) die Ladeluft des Laders die Luftpumpe (7) überströmen kann.

14. Verfahren nach Anspruch 13, **dadurch gekennzeichnet, dass** bei Unterbrechung oder Beendigung der Eindüsung von Reduktionsmittel, insbesondere Harnstofflösung, die Reduktionsmittel führenden Leitungen mittels Druckluft von dem Reduktionsmittel gereinigt werden.

15. Verfahren nach Anspruch 13 oder 14, **dadurch gekennzeichnet, dass** eine Unterbrechung oder Beendigung der Eindüsung von Reduktionsmittel durch Abschaltung einer Dosierpumpe (3) erfolgt.

16. Verfahren nach einem der Ansprüche 13 bis 15, **dadurch gekennzeichnet, dass** eine Ansteuerung oder Betätigung zumindest einer Dosierpumpe (3) und/oder zumindest einer Luftpumpe (7) und/oder zumindest eines Schaltventils (14) in Abhängigkeit von Motorbetriebsparametern erfolgt, insbesondere in Abhängigkeit der Parameter Abgastemperatur und Abgasmassenstrom.

## Claims

1. Reducing agent metering system for injecting a reducing agent into the exhaust gas flow (9) of a supercharged internal combustion engine for selective catalytic reduction, the metering system being connectable to a reducing agent tank (1) from which reducing agent can be taken, the metering system comprising at least one nozzle (5) via which the reducing agent can be injected into the exhaust gas flow (9) by means of compressed air, at least one part of the compressed air being taken from a charger of the internal combustion engine, **characterised in that** the compressed air supply (6) comprises an electric air pump (7) for producing compressed air and a bypass (19) parallel to the air pump (7) so that the charging air of the charger overflows/can overflow the air pump (7) via the bypass (19).

2. Metering system according to claim 1, **characterised in that** the bypass (19) comprises a non-return valve (18).

3. Metering system according to either claim 1 or claim 2, **characterised in that** there is a pressure sensor (16) arranged downstream of the air pump (7) and the bypass (19) so that the air pump (7) is/can be turned on/off depending on the pressure measured by means of the pressure sensor (16).

4. Metering system according to any of the preceding claims, **characterised in that** the charger is a turbocharger or a compressor which is driven directly by the internal combustion engine.

5. Metering system according to any of the preceding claims, **characterised in that** the metering system comprises means for calculating the exhaust gas mass flow or a sensor (11) for measuring the exhaust gas mass flow.

6. Metering system according to any of the preceding claims, **characterised in that** the metering system comprises a sensor (17) for measuring the exhaust gas temperature.

7. Metering system according to any of the preceding claims, **characterised in that** the compressed air supply (6) comprises a throttle valve (15).

8. Metering system according to any of the preceding claims, **characterised in that** the metering system comprises a metering pump (3) for delivering the reducing agent.

9. Metering system according to any of the preceding claims, **characterised in that** there is a connecting line (13) arranged between the reducing agent line (4) and a line of the compressed air supply, said connecting line (13) comprising a switching valve (14), more particularly a solenoid valve.

10. Metering system according to any of the preceding claims, **characterised in that** the metering system comprises a control device (12) by means of which the air pump (7) and/or a throttle valve (15) arid/or a metering pump (3) is/can be controlled depending on the measured value(s) which has/have been detected by the sensor(s) (11, 16, 17).

11. Metering system according to any of the preceding claims, **characterised in that** the metering system comprises a reducing agent tank (1), more particularly a urea solution tank.

12. Metering system according to any of the preceding claims, **characterised in that** the metering system comprises a binary nozzle (5), more particularly an external-mixing nozzle.

13. Method for controlling the injection of a reducing agent, more particularly a urea solution, by means of compressed air into the exhaust gas flow (9) of a supercharged internal combustion engine for selective catalytic reduction, **characterised in that** the amount of compressed air which is necessary for atomisation of the reducing agent is taken from the charging air of a charger of the internal combustion engine, an electric air pump being temporarily turned on when a minimum pressure of the charging air is not reached, the compressed air supply (6) comprising a bypass (19) parallel to the air pump (7) so that the charging air of the charger can overflow the air pump (7) via the bypass (19).

14. Method according to claim 13, **characterised in that** when the injection of reducing agent, more particularly urea solution, is interrupted or terminated, the reducing agent is removed from the lines carrying the reducing agent by means of compressed air.

15. Method according to either claim 13 or claim 14, **characterised in that** the injection of reducing agent is interrupted or terminated by shutting off a metering pump (3).

16. Method according to any of claims 13 to 15, **characterised in that** at least one metering pump (3) and/or at least one air pump (7) and/or at least one switching valve (14) is triggered or actuated depending on the engine operating parameters, more particularly depending on the parameters exhaust gas temperature and exhaust gas mass flow.

## Revendications

1. Système de dosage d'un agent de réduction pour injecter un agent de réduction dans le courant de gaz d'échappement (9) d'un moteur à combustion interne suralimenté pour assurer une réduction catalytique sélective, dans lequel le système de dosage peut être raccordé à un réservoir d'agent de réduction (1), d'où l'agent de réduction peut être prélevé, dans lequel le système de dosage présente au moins une buse (5), par laquelle l'agent de réduction peut être injecté dans le courant de gaz d'échappement (9) par de l'air sous pression, dans lequel au moins une partie de l'air comprimé est retirée d'un compresseur à suralimentation du moteur à combustion interne, **caractérisé en ce que** l'alimentation en air comprimé (6) présente une pompe à air électrique (7) pour produire de l'air comprimé et, en parallèle avec la pompe à air (7), une dérivation (19) de sorte que l'air du compresseur inonde ou puisse inonder la pompe à air (7) via la dérivation (19).

2. Système de dosage selon la revendication 1, **caractérisé en ce que** la dérivation (19) présente une soupape de non-retour (18).

3. Système de dosage selon la revendication 1 ou la revendication 2, **caractérisé en ce que** l'on agence en aval de la pompe à air (7) et de la dérivation (19) un capteur de pression (16) de sorte que la pompe à air (7) puisse être branchée/débranchée ou soit branchée/débranchée en fonction de la pression mesurée au moyen du capteur de pression (16).

4. Système de dosage selon l'une quelconque des revendications précédentes, **caractérisé en ce que** le compresseur à suralimentation est un turbocompresseur ou un compresseur entraîné directement par le moteur à combustion interne.

5. Système de dosage selon l'une quelconque des revendications précédentes, **caractérisé en ce que** le système de dosage présente des moyens pour calculer le courant massique de gaz d'échappement ou un capteur (11) pour mesurer le courant massique de gaz d'échappement.

6. Système de dosage selon l'une quelconque des revendications précédentes, **caractérisé en ce que** le système de dosage présente un capteur (17) pour mesurer la température des gaz d'échappement.

7. Système de dosage selon l'une quelconque des revendications précédentes, **caractérisé en ce que** l'alimentation en air comprimé (6) présente une soupape d'étranglement (15).

8. Système de dosage selon l'une quelconque des revendications précédentes, **caractérisé en ce que** le système de dosage présente une pompe de dosage (3) pour acheminer l'agent de réduction.

9. Système de dosage selon l'une quelconque des revendications précédentes, **caractérisé en ce que** l'on agence entre une conduite d'agent de réduction (4) et une conduite de l'alimentation en air comprimé, une conduite de raccordement (13), dans lequel la conduite de raccordement (13) présente une soupape de commutation (14), en particulier une soupape magnétique.

10. Système de dosage selon l'une quelconque des revendications précédentes, **caractérisé en ce que** le système de dosage présente un appareil de commande (12), au moyen duquel on peut commander ou l'on commande la pompe à air (7) et/ou une soupape d'étranglement (15) et/ou une pompe de dosage (3) en fonction de la valeur de mesure ou des valeurs de mesure enregistrées par le ou les capteurs (11, 16, 17).

11. Système de dosage selon l'une quelconque des revendications précédentes, **caractérisé en ce que** le système de dosage présente un réservoir d'agent de réduction (1), en particulier un réservoir de solution d'urée.

12. Système de dosage selon l'une quelconque des revendications précédentes, **caractérisé en ce que** le système de dosage présente une buse binaire (5), en particulier une buse mélangeuse externe.

13. Procédé de commande de l'injection d'un agent de réduction, en particulier d'une solution d'urée, au moyen d'air comprimé dans le courant de gaz d'échappement (9) d'un moteur à combustion interne suralimenté à des fins de réduction catalytique sélective, **caractérisé en ce que** la quantité d'air comprimé nécessaire à l'atomisation de l'agent de réduction est retirée de l'air de compression d'un compresseur à suralimentation du moteur à combustion interne, dans lequel, lorsque l'on passe en dessous d'une pression minimale de l'air de compression, on branche temporairement une pompe à air électrique, dans lequel l'alimentation en air comprimé (6) présente, en parallèle avec la pompe à air (7), une dérivation (19) de sorte que l'air de compression du compresseur à suralimentation puisse inonder la pompe à air (7) via la dérivation (19).

14. Procédé selon la revendication 13, **caractérisé en ce que**, lors d'une interruption ou de l'achèvement de l'injection de l'agent de réduction, en particulier de la solution d'urée, les conduites acheminant l'agent de réduction sont nettoyées de l'agent de réduction au moyen d'air comprimé.

15. Procédé selon la revendication 13 ou la revendication 14, **caractérisé en ce qu'**une interruption ou l'achèvement de l'injection d'agent de réduction se fait par déconnexion d'une pompe de dosage (3).

16. Procédé selon l'une quelconque des revendications 13 à 15, **caractérisé en ce qu'**une commande d'au moins une pompe de dosage (3) et/ou d'au moins une pompe à air (7) et/ou d'au moins une soupape de commutation (14) se fait en fonction de paramètres d'exploitation du moteur, en particulier en fonction des paramètres, température des gaz d'échappement et courant massique des gaz d'échappement.
